# EUROPÄISCHE PATENTSCHRIFT

(11) **EP 3 180 550 B1**
(45) Veröffentlichungstag und Bekanntmachung des Hinweises auf die Patenterteilung: **03.10.2018**
(21) Anmeldenummer: 15756124.2
(22) Anmeldetag: 12.08.2015
(51) Int. Cl.: F16J 15/3204, F16J 15/3208, F16F 9/36, F15B 15/14, F16J 15/16, F16F 1/36

(54) **DICHTUNGSANORDNUNG MIT DÄMPFUNGSGLIED**
SEAL ARRANGEMENT WITH DAMPING ELEMENT
DISPOSITIF D'ÉTANCHÉITÉ AVEC SYSTÈME D'AMORTISSEMENT

(30) Priorität: 15.08.2014 DE 102014216268
(43) Veröffentlichungstag der Anmeldung: 21.06.2017
(73) Patentinhaber: Trelleborg Sealing Solutions Germany GmbH, 70565 Stuttgart (DE)
(72) Erfinder: JORDAN, Holger, 73765 Neuhausen a.d. F. (DE)
(74) Vertreter: Kohler Schmid Möbus Patentanwälte
(86) Internationale Anmeldenummer: PCT/EP2015/068546
(87) Internationale Veröffentlichungsnummer: WO 2016/023946

(56) Entgegenhaltungen:
- WO-A1-00/75539
- WO-A1-91/04430
- DE-A1- 3 606 886
- DE-A1- 3 705 448
- DE-A1- 3 931 163
- DE-A1- 4 106 159
- DE-C1- 3 425 431
- GB-A- 2 202 285

## Beschreibung

Die Erfindung betrifft eine Dichtungsanordnung umfassend ein erstes Maschinenelement und ein zweites Maschinenelement, die unter Ausbildung eines Lager- bzw. Dichtspalts voneinander beabstandet entlang einer Bewegungsachse relativ zueinander translatorisch bewegbar angeordnet sind. Die Dichtungsanordnung weist ein Dichtungselement mit einer Dichtlippe auf, das zumindest abschnittsweise in einer Haltenut eines der beiden Maschinenelemente angeordnet ist und durch das ein Hochdruckbereich der Dichtungsanordnung gegenüber einem Niederdruckbereich der Dichtungsanordnung abgedichtet ist. In der Haltenut ist ein gummielastisches Vorspannelement zum Vorspannen des Dichtungselements mit seiner Dichtlippe gegen eine Dichtfläche des anderen der beiden Maschinenelemente angeordnet.

Derartige Dichtungsanordnungen finden in der Praxis eine breite Anwendung und sind beispielsweise bei Stoßdämpfern und hydraulischen Aktuatoren seit Langem etabliert.

Die Standzeiten dieser Dichtungsanordnungen hängen entscheidend von der Langlebigkeit des eingesetzten Dichtungselements ab.

Das Dichtungselement ist im Betriebseinsatz der Dichtungsanordnung häufig hohen mechanischen Belastungen unterworfen. So kann eine Druckbeaufschlagung des Hochdruckbereichs der Dichtungsanordnung bzw. die translatorische Relativbewegung der beiden Maschinenteile zu solch hohen mechanischen Belastungen des Dichtungselements führen, dass dieses in seinem Anlagebereich an einer niederdruckseitig angeordneten Nutflanke der Haltenut übermäßig beansprucht und ggf. sogar plastisch verformt werden kann. Im Extremfall kann das Dichtungselement unter den Belastungen in den Dichtspalt zwischen den beiden Maschinenteilen hineinextrudiert werden. Insgesamt ist dies für das Dichtungsvermögen des Dichtungselements nachteilig und kann zu einem vollständigen Funktionsverlust des Dichtungselements führen. In der Praxis muss das Dichtungselement, welches beispielsweise aus einem Fluorkautschuk (FKM) oder aus einem thermisch höher belastbaren Polytetraflurethylen (PTFE) bestehen kann, deshalb hinreichend groß dimensioniert werden, um den im Betrieb auftretenden Belastungen ausreichend standhalten zu können. Eine größere Dimensionierung des Dichtungselements kann jedoch wiederum zu einem verschlechterten Kaltschrumpfverhalten des Dichtungselements führen. Die Folge können ein verschlechterter Reibungskoeffizient sowie ein verschlechtertes Dichtungsvermögen des Dichtungselements im Niedertemperaturbereich sein.

Es ist deshalb die Aufgabe der Erfindung, die eingangs genannte Dichtungsanordnung sowie einen damit versehenen Stoßdämpfer bzw. hydraulischen Aktuator derart weiterzubilden, dass deren Dichtungselement im Betriebseinsatz vor übermäßigen Belastungen besser geschützt wird, sodass das Dichtungselement bei einer unveränderten Standzeit des Dichtungselements kleiner dimensioniert und ggf. aus einem gegenüber mechanischen Belastungen weniger widerstandsfähigen Material mit einem beispielsweise gegenüber PTFE nochmals besseren Reibungskoeffizienten gefertigt sein kann.

Die die Dichtungsanordnung betreffende Aufgabe wird durch eine Dichtungsanordnung mit den in Patentanspruch 1 angegebenen Merkmalen gelöst. Der erfindungsgemäße Stoßdämpfer bzw. hydraulische Aktuator weist die in Anspruch 11 angegebenen Merkmale auf.

Weiterbildungen der Erfindung sind Gegenstand der Beschreibung, der Unteransprüche sowie der in der Zeichnung dargestellten Ausführungsbeispiele.

Die Dichtungsanordnung weist erfindungsgemäß ein elastisch verformbares Dämpfungsglied zur axialen Abstützung des Dichtungselements auf, das in Richtung der Bewegungsachse, d. h. in axialer Richtung, zumindest abschnittsweise zwischen einer niederdruckseitigen Nutflanke der Haltenut und dem Dichtungselement angeordnet ist. Das Dämpfungsglied besteht dabei aus einem Material mit einem im Vergleich zum Elastizitätsmodul des Materials des Dichtungselements kleineren Elastizitätsmodul.

Das Dichtungselement kann sich im druckbeaufschlagten Betriebszustand der Dichtungsanordnung bzw. bei einer mit der Relativbewegung der beiden Maschinenelemente einhergehenden axialen Verschiebung (Mitnahme) des Dichtungselements in Richtung auf die Niederdruckseite der Dichtungsanordnung an dem Dämpfungsglied abstützen. Das Dämpfungslied wird dabei unter der axial gerichteten Anpresskraft des Dichtungselements gegen das Dämpfungsglied aufgrund seines im Vergleich zum Material des Dichtungselements kleineren Elastizitätsmoduls elastisch verformt. Einer Überbeanspruchung sowie einer damit einhergehenden Beschädigung des Dichtungselements kann dadurch selbst bei Hoch- oder Höchstdruckanwendungen bzw. bei hohen Beschleunigungswerten der translatorischen Relativbewegung der beiden Maschinenelemente zuverlässig entgegengewirkt werden. Das Dichtungselement kann darüber hinaus insgesamt kleiner dimensioniert werden, d. h. mit einem geringeren Gesamtvolumen ausgeführt werden, als dies ohne ein solches Dämpfungsglied möglich ist. Dies ist im Hinblick auf das Kaltschrumpfverhalten des Dichtungselements vorteilhaft. Darüber hinaus kann das Dichtungselement aus einem gegenüber mechanischen Belastungen weniger widerstandsfähigen Material bestehen, ohne dass sich dies auf die Lebensdauer des Dichtungselements negativ auswirkt. Das Dichtungselement kann so aus einem Material gefertigt sein (bestehen), das sich einerseits durch einen besonders niederen Reibungskoeffizienten auszeichnet, welches aber aufgrund seiner geringen Widerstandskraft gegenüber den statischen/dynamischen Betriebsbelastungen bislang für den Einsatz in einer eingangs genannten Dichtungsanordnung als ungeeignet erachtet wurde. Der verringerte Reibungskoeffizient ermöglicht dabei einen geringeren Verschleiß und einen nochmals breiteren technischen Einsatzbereich der Dichtungsanordnung. Durch das Dämpfungsglied kann zudem möglichen unerwünschten Schwingungen in der Dichtungsanordnung, die durch den Haftgleiteffekt (Stick-Slip-Verhalten) des an der Dichtfläche des zweiten Maschinenteils anliegenden Dichtungselements verursacht werden, entgegengewirkt werden.

Zwischen dem Dämpfungsglied und der Dichtfläche des zweiten Maschinenteils ist ein Freiraum ausgebildet, in den sich das Dämpfungsglied bei seiner Beaufschlagung mit der axial in Richtung der Niederdruckseite gerichteten Anpresskraft des Dichtungselements in Richtung auf das zweite Maschinenelement elastisch hineinverformen kann. Dieser Freiraum gewährleistet somit, dass sich das Dämpfungsglied quer zur Bewegungsachse frei ausdehnen kann. Der Freiraum ist durch die Dichtfläche des zweiten Maschinenelements und eine der Dichtfläche zuweisenden Innenwand des Dämpfungsglieds in radialer Richtung begrenzt. Der Freiraum erstreckt sich mit anderen Worten kontinuierlich von der Innenwand des des Dämpfungsglieds bis zur Dichtfläche des zweiten Maschinenelements. Unter einem Freiraum wird ein Raumvolumen der Dichtungsanordnung verstanden, in dem kein Festkörper, d. h. kein Bauteil der Dichtungsanordnung, angeordnet ist. Insgesamt wird dadurch der für die Dämpfungswirkung des Dämpfungsglieds erforderliche Verformungsraum zur Verfügung gestellt. Darüber hinaus kann dadurch eine effektive Abstützfläche des Dämpfungsglieds für das Dichtungselement proportional zur Anpresskraft des Dichtungselements gegen das Dämpfungsglied, d. h. proportional zu einem im Hochdruckbereich der Dichtungsanordnung herrschenden atmosphärischen Druck, vergrößert werden.

Ein nochmals verbesserter Schutz des Dichtungselements vor einer Überbeanspruchung bzw. Beschädigung wird erfindungsgemäß dadurch erreicht werden, dass das Dämpfungsglied den Dichtspalt zumindest im druckbeaufschlagten Zustand der Dichtungsanordnung (bzw. des Hochdruckbereichs) in axialer Richtung teilweise überdeckt. In diesem Fall kommt dem Dämpfungsglied die zusätzliche Funktion eines Sperrelements zu, durch das der Dichtspalt dynamisch, d. h. in Abhängigkeit von der auf das Dämpfungsglied einwirkenden Anpresskraft, in seiner lichten Weite teilweise verlegt werden kann. Dadurch kann, insbesondere bei Hochdruck- oder Höchstdruckanwendungen, das Risiko einer plastischen Verformung des Dichtungselements in den zwischen den beiden Maschinenteilen ausgebildeten Dichtspalt hinein, also einem Extrudieren des Dichtungselements in den Dichtungsspalt, zuverlässig entgegengewirkt werden.

Das Dämpfungsglied ist erfindungsgemäß derart ausgebildet, dass das Dämpfungsglied bei einer vorgegebenen maximalen Druckbeaufschlagung der Hochdruckseite der Dichtungsanordnung, also einer maximalen Anpresskraft des Dichtungselements gegen das Dämpfungsglied, die Dichtfläche des zweiten Maschinenteils nicht berührt. Andernfalls könnte das Dämpfungsglied eine Relativverschiebung der beiden Maschinenelemente beeinflussen.
Das Dämpfungsglied kann erfindungsgemäß eine polygonale, eine runde, ovale bzw. elliptische oder auch eine andere Querschnittsform aufweisen. Das Dämpfungsglied kann in seinem unbelasteten Zustand vollständig innerhalb der Haltenut angeordnet sein. Mit anderen Worten steht das Dämpfungsglied in seinem unbelasteten Zustand quer zur Bewegungsachse nicht über die niederdruckseitige Nutflanke in Richtung auf das zweite Maschinenteil hervor.

Im konstruktiv einfachsten Fall liegt das Dämpfungsglied in unbelasteten Zustand, vorzugsweise mit seinem von dem zweiten Maschinenelement wegweisenden Ende, in einer zur Bewegungsachse orthogonalen Richtung an dem ersten Maschinenelement an. Das erste Maschinenelement dient dem Dämpfungsglied in diesem Falle als Widerlager, so dass sich das Dämpfungsglied in Abhängigkeit von seiner axialen Kompression durch das Dichtungselement und unter Anlage an der niederdruckseitigen Nutflanke im Wesentlichen in Richtung des zweiten Maschinenelements verformt. Nach einer bevorzugten Ausführungsform der Erfindung kann das Dämpfungsglied an einer Schulter oder am Nutgrund der Haltenut des ersten Maschinenteils anliegen bzw. abgestützt sein.
Es versteht sich, dass das Dämpfungsglied direkt (unmittelbar) oder über das Vorspannelement an dem ersten Maschinenelement abgestützt sein kann.
Unter fertigungstechnischen Aspekten hat es sich als vorteilhaft erwiesen, dass das Dämpfungsglied in der Haltenut lose angeordnet bzw. eingelegt ist.
Das Dämpfungsglied kann nach der Erfindung insbesondere einstückig mit dem Vorspannelement ausgebildet sein. Dies ist unter Kostenaspekten sowie im Hinblick auf eine vereinfachte Montage der Dichtungsanordnung von Vorteil.
Das Dämpfungsglied kann nach einer Weiterbildung der Erfindung an dem Dichtungselement oder an der niederdruckseitigen Nutflanke der Haltenut abschnittsweise befestigt sein.

Das Dichtungselement kann nach der Erfindung mit einem axialen Spiel in der Haltenut angeordnet sein. Dadurch kann das Ansprechverhalten der Dichtungsanordnung bzw. des Dichtungselements dem Bedarf entsprechend eingestellt werden.

Für einen ggf. erforderlichen Druckausgleich zwischen der Niederdruckseite und der Hochdruckseite der Dichtungsanordnung (sogenannte Druckinversionslage) kann das Dichtungselement einen Druckausgleichskanal aufweisen, durch den die Niederdruckseite mit der Hochdruckseite fluidisch verbindbar ist.

Nach einer Weiterbildung der Erfindung weist das Dichtungselement einen Stützabschnitt auf, der von der Dichtkante zur Hochdruckseite hin axial beabstandet angeordnet ist und über den sich das Dichtungselement an der Dichtfläche abstützen kann.

Das Dämpfungsglied kann insbesondere aus einem volumenkonstant elastisch verformbaren Material bestehen. Dadurch kann eine zur Druckbelastung des Dämpfungsglieds proportionale Verformung des Dämpfungsglieds quer zur Bewegungsachse vereinfacht eingestellt werden. Das Dämpfungsglied kann dabei insbesondere aus einem Elastomer bestehen. Es versteht sich, dass das Elastomer Zuschlagstoffe, wie z.B. Fasern und/oder Metallpartikel, aufweisen kann, um dessen mechanische bzw. thermische Belastbarkeit bedarfsgerecht einzustellen.

Nach einer alternativen Ausführungsform der Erfindung kann das Material des Dämpfungsglieds komprimierbare Luft- oder Gaseinschlüsse, insbesondere Kohlendioxid-, Stickstoff-oder andere Inertgaseinschlüsse, aufweisen. Das Material des Dämpfungselements ist in diesem Fall nicht volumenkonstant elastisch verformbar.

Das Dichtungselement kann insbesondere aus Polytetrafluoräthylen oder einem anderen Fluorpolymer, insbesondere einem fluoriertes Copolymer, das bevorzugt PTFE-Monomere umfasst, gebildet sein. Es versteht sich, dass die vorgenannten Materialien auch Zuschlagstoffe enthalten können.

Erfindungsgemäß kann eines der beiden Maschinenelemente als ein Gehäuse oder Zylinder und das jeweils andere der beiden Maschinenelemente als eine im Gehäuse/Zylinder geführte Kolbenstange ausgebildet sein. Das Dichtungselement ist in diesem Fall als ein Radialdichtungselement ausgebildet. Das Vorspannelement und das Dämpfungsglied weisen dabei bevorzugt eine geschlossene Ringform auf.

Die erfindungsgemäße Dichtungsanordnung kann bei einer Vielzahl von technischen Bauteilen eingesetzt werden. So können erfindungsgemäß Schwingungs- bzw. Stoßdämpfer, hydraulische Aktuatoren bzw. Hydraulikantriebe, insbesondere bei Baufahrzeugen, eine vorstehend erläuterte Dichtungsanordnung aufweisen.
Zusammenfassend betrifft die Erfindung eine Dichtungsanordnung umfassend:
- ein erstes Maschinenelement und ein zweites Maschinenelement, die unter Ausbildung eines Dichtspalts voneinander beabstandet und entlang einer Bewegungsachse relativ zueinander translatorisch bewegbar angeordnet sind;
- ein Dichtungselement mit einer Dichtlippe, das zumindest abschnittsweise in einer Haltenut des ersten Maschinenelements angeordnet ist und das zum Abdichten eines Niederdruckbereichs (N) gegenüber einem Hochdruckbereich (H) der Dichtungsanordnung dient;
- ein gummielastisch verformbares Vorspannelement, das in der Haltenut angeordnet ist und das einem Vorspannen des Dichtungselements mit seiner Dichtlippe gegen eine Dichtfläche des zweiten Maschinenelements dient; und
- zumindest ein elastisch verformbares Dämpfungsglied zur axialen Abstützung des Dichtungselements, das in axialer Richtung zumindest abschnittsweise zwischen einer niederdruckseitig angeordneten Nutflanke der Haltenut und dem Dichtungselement angeordnet ist und wobei
das Dämpfungsglied aus einem Material mit einem im Vergleich zum Elastizitätsmodul des Materials des Dichtungselements kleineren Elastizitätsmodul besteht.

Eine ähnliche Dichtungsanordnung ist aus WO 91/04430 A1 bekannt. Nachfolgend wird die Erfindung anhand von in der Zeichnung wiedergegebenen Ausführungsbeispielen erläutert. In den Figuren sind die einzelnen Bauteile so wiedergegeben, dass das funktionelle Zusammenwirken der Bauteile verdeutlicht ist.

In der Zeichnung zeigen:
- Fig. 1: ein erstes Ausführungsbeispiel einer erfindungsgemäßen Dichtungsanordnung im unbelasteten Zustand, mit zwei Maschinenelementen, die unter Ausbildung eines Dichtspalts voneinander beabstandet angeordnet und relativ zueinander translatorisch bewegbar sind, wobei ein Hochdruckbereich H und ein Niederdruckbereich N der Dichtungsanordnung über ein in einer Haltenut angeordnetes Dichtelement gegeneinander abgedichtet sind, und wobei dem Dichtungselement ein Dämpfungsglied zugeordnet ist, über das das Dichtungselement an einer niederdruckseitigen Nutflanke der Haltenut abstützbar ist;
- Fig. 2: die Dichtungsanordnung aus Fig. 1 in einem druckbeaufschlagten Betriebszustand, in einer ausschnittsweisen Schnittdarstellung;
- Fig. 3: ein weiteres Ausführungsbeispiel der Dichtungsanordnung in einer ausschnittsweisen Schnittdarstellung;
- Fig. 4: eine weiteres Ausführungsbeispiel der Dichtungsanordnung in einer ausschnittsweisen Schnittdarstellung;
- Fig. 5: ein weiteres Ausführungsbeispiel der Dichtungsanordnung in einer ausschnittsweisen Schnittdarstellung;
- Fig. 6: ein weiteres Ausführungsbeispiel der Dichtungsanordnung, bei der das Dämpfungsglied eine gewölbte Innenseite aufweist, in einer ausschnittsweisen Schnittdarstellung;
- Fig. 7: eine Dichtungsanordnung, bei der das Dämpfungsglied bikonvex ausgeführt ist, in einer ausschnittsweisen Schnittdarstellung;
- Fig. 8: eine Dichtungsanordnung, bei der das Dämpfungsglied eine runde bzw. eine im Wesentlichen runde Querschnittsform aufweist, in einer ausschnittsweisen Schnittdarstellung;
- Fig. 9: eine Dichtungsanordnung, bei der das Vorspannelement das Dichtungselement axial übergreift, in einer ausschnittsweisen Schnittdarstellung;
- Fig. 10: eine Dichtungsanordnung, bei der das Dichtungselement mit einem Druckausgleichskanal und mit einem Stützabschnitt versehen ist, in einer ausschnittsweisen Schnittdarstellung;
- Fig. 11: einen hydraulischen Aktuator mit einer erfindungsgemäßen Dichtungsanordnung.

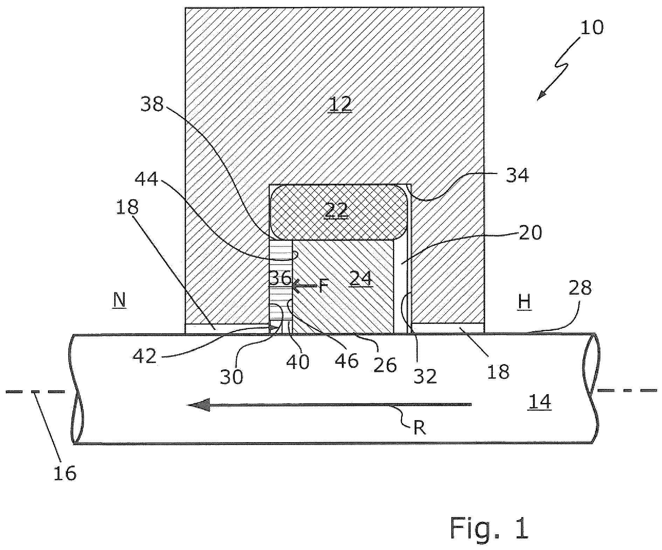

**Fig. 1** zeigt eine Dichtungsanordnung **10** in einer ausschnittsweisen Schnittdarstellung. Die Dichtungsanordnung 10 umfasst ein erstes Maschinenelement **12** und ein zweites Maschinenelement **14**. Die beiden Maschinenelemente 12, 14 sind entlang einer Bewegungsachse **16** relativ zueinander translatorisch bewegbar angeordnet. Das erste Maschinenelement 12 ist beispielhaft als ein Gehäuse und das zweite Maschinenelement 14 als eine im Gehäuse geführte Kolbenstange ausgebildet. Die beiden Maschinenelemente 12, 14 sind voneinander beabstandet angeordnet, sodass zwischen den beiden Maschinenelementen 12, 14 in an sich bekannter Weise ein Lager- oder Dichtspalt **18** ausgebildet ist.

Das erste Maschinenteil 12 weist eine Haltenut **20** auf. In der Haltenut 20 ist ein gummielastisches Vorspannelement **22** und ein Dichtungselement **24** angeordnet. Das Vorspannelement 22 und das Dichtungselement 24 sind jeweils ringförmig ausgebildet. Das Dichtungselement 24 weist vorliegend einen rechteckige Querschnittsform auf, kann aber auch eine davon abweichende andere Querschnittsform aufweisen.

Das Vorspannelement 22 dient dazu, das Dichtungselement 24 mit seiner Dichtlippe **26** in Richtung auf und gegen eine Dichtfläche **28** des zweiten Maschinenelements 14 vorzuspannen. Das Dichtungselement 24 liegt somit an der Dichtfläche 28 des zweiten Maschinenteils 14 vorgespannt dichtend an. Durch das Dichtungselement 24 sind ein mit **H** bezeichneter Hochdruckbereich der Dichtungsanordnung 10 und ein mit **N** bezeichneter Niederdruckbereich der Dichtungsanordnung 10 gegeneinander abgedichtet.

Die Haltenut 20 kann im konstruktiv einfachsten Falle eine rechteckige Querschnittsform aufweisen, wie dies in Fig. 1 gezeigt ist. Die Haltenut 20 umfasst eine niederdruckseitig angeordnete Nutflanke **30** und eine hochdruckseitige angeordnete Nutflanke **32**, die über einen Nutboden **34** miteinander verbunden sind. Das Vorspannelement 22 liegt an dem Nutboden 34 an und ist an diesem in einer zur Bewegungsachse 16 radialen Richtung abgestützt.

Wie aus Fig. 1 hervorgeht, ist das Dichtungselement 24 in der Haltenut 20 mit einem axialen Spiel angeordnet. Alternativ kann das Dichtungselement 24 auch in axialer Richtung formschlüssig in der Haltenut 20 gehalten angeordnet sein.

Die Dichtungsanordnung 10 weist ein elastisch verformbares Dämpfungsglied **36** auf. Das Dämpfungsglied 36 ist in Richtung der Bewegungsachse 16 zwischen der niederdruckseitig angeordneten Nutflanke 30 der Haltenut 20 und dem Dichtungselement 24 angeordnet.

Das Dämpfungsglied 36 ermöglicht ein niederdruckseitiges Abstützen des Dichtungselements 24 sowie auch eine Dämpfung einer Axialbewegung des Dichtungselements 24 in Richtung auf die niederdruckseitig angeordnete Nutflanke 30 der Haltenut 20.

Das Dämpfungsglied 36 liegt mit seinem von dem zweiten Maschinenelement 14 wegweisenden Ende **38** am gummielastischen Vorspannelement 22 an und ist über das Vorspannelement 22 am Nutboden 34 der Haltenut 20 des ersten Maschinenelements 12 (federnd) abgestützt.

Das Dämpfungsglied 36 kann lose in die Haltenut 20 eingelegt sein und ist vorliegend beispielhaft als ein zu dem ersten Maschinenteil 12, dem gummielastischen Vorspannelement 22 und dem Dichtungselement 24 separates Bauteil ausgeführt.

Das Dämpfungsglied 36 besteht aus einem elastisch verformbaren Material mit einem im Vergleich zum Elastizitätsmodul des Materials des Dichtungselements 24 kleineren Elastizitätsmodul. Dadurch ist sichergestellt, dass sich das Dämpfungsglied 36 im druckbeaufschlagten Zustand des Hochdruckbereichs H und einem damit einhergehenden Anpressen des Dichtungselements 24 gegen das Dämpfungsglied 36 leichter verformt, als das sich daran axial abstützende Dichtungselement 24.

Das Material des Dämpfungsglieds 36 weist keine (relevanten) Gas- oder Lufteinschlüsse auf und ist somit volumenkonstant elastisch verformbar.

Das Material des Dichtungselements 24 kann beispielsweise ein elastischer Fluorpolymerwerkstoff, insbesondere ein fluorierter Copolymerwerkstoff, sein. Es versteht sich, dass das Material des Dichtungselements sogenannte Zuschlagstoffe enthalten kann.

Im unbelasteten Betriebszustand der Dichtungsanordnung 10 ist das Dämpfungsglied 36 vollständig innerhalb der Haltenut 20 angeordnet. Das Dämpfungsglied 36 ragt somit mit seinem der Dichtfläche 28 des zweiten Maschinenelements 14 zuweisenden Innenwand **40** nicht über die niederdruckseitig angeordnete Nutflanke 30 der Haltenut 20 in Richtung auf die Dichtfläche 28 hervor. Mit anderen Worten ist der Innenquerschnitt (nicht bezeichnet) des Dämpfungsglieds 36 im unbelasteten Betriebszustand der Dichtungsanordnung 10 größer als der Durchgangsquerschnitt (nicht bezeichnet) des ersten Maschinenteils 12.

Zwischen dem Dämpfungsglied 36 und der Dichtfläche 28 des zweiten Maschinenelements 14 ist ein Freiraum **42** ausgebildet. Unter einem Freiraum 42 wird ein Raumvolumen verstanden, in dem kein Festkörper, d. h. kein Bauteil der Dichtungsanordnung 10, angeordnet ist. Der Freiraum 42 erstreckt sich von der Innenwand 40 des Dämpfungsglieds 36 kontinuierlich bis zur Dichtfläche 28 des zweiten Maschinenelements 14 und ist durch diese beiden Bauteile in radialer Richtung begrenzt.

Im druckbeaufschlagten Zustand der Dichtungsanordnung 10 bzw. des Hochdruckbereichs H wird das Dichtungselement 24 in Richtung auf und mit einer Anpresskraft F gegen das Dämpfungsglied 36 bewegt bzw. gepresst. Das Dämpfungsglied 36 liegt an der niederdruckseitig angeordneten Nutflanke 30 an und wird durch die Anpressraft F in axialer Richtung komprimiert. Das Dämpfungsglied 36 verformt sich dadurch quer zur Bewegungsachse 16 in Richtung auf das zweite Maschinenelement 14, mithin in einer radialen Richtung, in den Freiraum 40 der Dichtungsanordnung hinein.

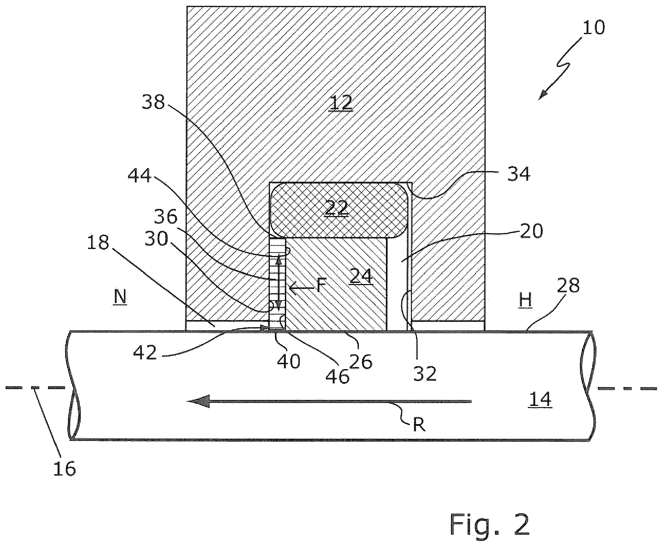

Bei einer Druckbeaufschlagung des Hochdruckbereichs H mit einem maximalen Betriebsdruck wird der Dichtspalt 18 durch das Dämpfungsglied 36 in axialer Richtung teilweise überdeckt, wie dies in der nachstehenden Figur 2 gezeigt ist.

Durch die Verformung des Dämpfungsglieds 36 in den Freiraum 18 hinein kann eine effektive Abstützfläche 44 des Dämpfungsglieds 36 für das Dichtungselement 24 druckproportional vergrößert werden. Einer Beschädigung bzw. Extrusion des Dichtungselements 24 in den Dichtspalt 18 hinein kann dabei durch die teilweise axiale Überdeckung des Dichtspalts 18 zuverlässig entgegengewirkt werden.

**Fig. 2** zeigt die Dichtungsanordnung 10 aus Fig. 1 im druckbeaufschlagten Zustand des Hochdruckbereichs H und bei einem maximalen hochdruckseitigen Betriebsdruck. Das Dichtungselement 24 liegt mit seiner niederdruckseitigen Seitenwand **46** am Dämpfungsglied 36 an und stützt sich am Dämpfungsglied 36 ab. Das Dämpfungsglied 36 ist gegenüber dem in Fig. 1 gezeigten unbelasteten Zustand der Dichtungsanordnung (und des Dämpfungsglieds 36) durch das Dichtungselement 24 in axialer Richtung komprimiert und hat sich quer zur Bewegungsachse 16, also in radialer Richtung, in den Freiraum 42 hineinverformt.

Wie aus Fig. 2 hervorgeht, ragt das Dämpfungsglied 36 aus der Haltenut in Richtung auf die Dichtfläche 28 des zweiten Maschinenteils 14 hervor. Der Dichtspalt 18 wird somit in axialer Richtung vom Dämpfungsglied 36 teilweise überdeckt. Das Dämpfungsglied dient dadurch im druckbeaufschlagten Betriebszustand der Dichtungsanordnung 10 als ein mechanisches Sperrelement für das Dichtungselement 24, durch das eine unerwünschte plastische Verformung (Extrusion) des Dichtungselements 24 in den Dichtspalt 18 hinein entgegengewirkt werden kann.

Zu beachten ist, dass die Innenwand 40 des Dämpfungsglieds 36 bei dem auf der Hochdruckseite H der Dichtungsanordnung 10 herrschenden maximalen Betriebsdruck von der Dichtfläche 28 des zweiten Maschinenteils beabstandet angeordnet ist. Dadurch wird eine unerwünschte Erhöhung der Reibkraft zwischen den beiden Maschinenteilen 12, 14 zuverlässig vermieden.

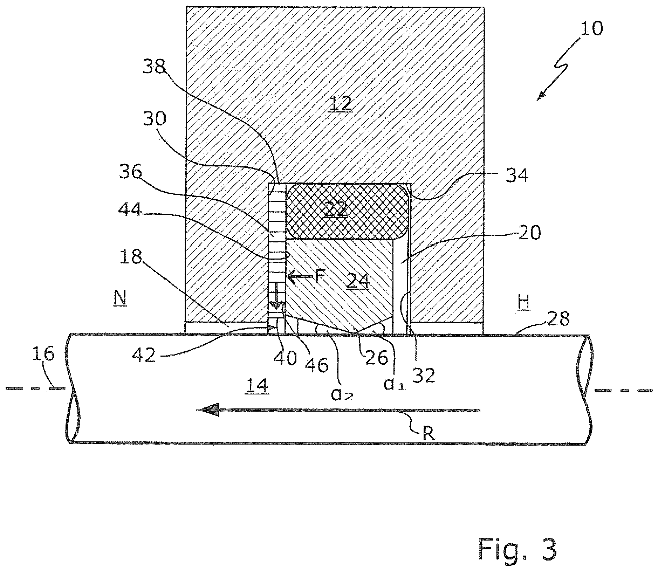

**Fig. 3** zeigt eine weitere Ausführungsform einer Dichtungsanordnung 10, die sich von dem in Fig. 1 wiedergegebenen Ausführungsbeispiel im Wesentlichen darin unterscheidet, dass das Dämpfungsglied 36 direkt, d. h. unmittelbar, am ersten Maschinenteil 12 abgestützt ist. Das Dämpfungsglied kann insbesondere am Nutboden 34 der Haltenut 20 des ersten Maschinenelements 12 anliegen und an diesem -zumindest bei dessen axial gerichteter Kompression durch das Dichtungselement 24 - abgestützt sein. Das Dämpfungsglied 36 erstreckt sich im gezeigten unbelasteten Betriebszustand der Dichtungsanordnung 10 einer zur Bewegungsachse 16 radialen Richtung nahezu bis zum Dichtspalt 28. Mit anderen Worten weist das Dämpfungsglied 36 im unbelasteten Zustand einen Innenquerschnitt (nicht gezeigt) auf, der größer ist, als der Durchgangsquerschnitt (nicht gezeigt) des ersten Maschinenteils 12.

Das Dämpfungsglied 36 ist wie auch bei der in Fig. 1 gezeigten Dichtungsanordnung als ein zu dem gummielastischen Vorspannelement 22 sowie zu dem Dichtungselement 24 separates Bauteil ausgeführt.

Das Dichtungselement 24 weist eine Dichtlippe 26 mit einem hochdruckseitigen Kontaktflächenwinkeln **a1** und einem niederdruckseitigen Kontaktflächenwinkel **a2** auf, wobei a1, a2 jeweils kleiner als 90° sind. Der hochdruckseitige Kontaktflächenwinkel a1 ist vorzugsweise größer, als der niederdruckseitige Kontaktflächenwinkel a2.

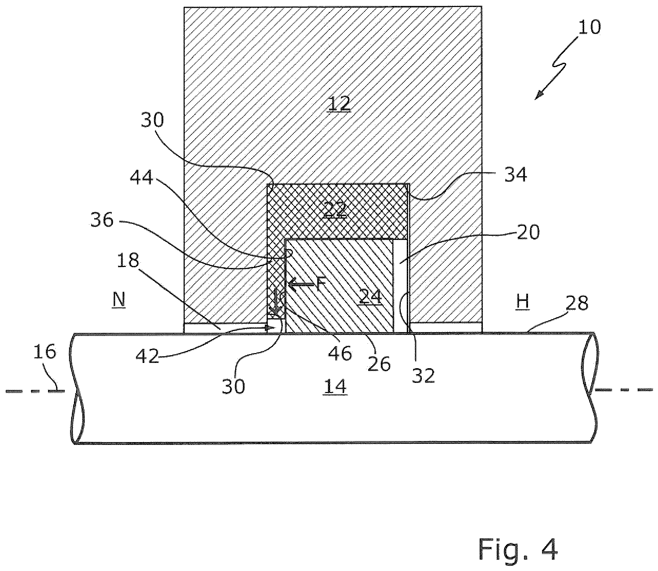

In **Fig. 4** ist ein weiteres Ausführungsbeispiel der Dichtungsanordnung 10 in einer ausschnittsweisen Schnittdarstellung gezeigt. Das Dämpfungsglied 36 und das gummielastische Vorspannelement 22 sind bei dieser Ausführungsform einstückig miteinander ausgeführt. Das Dichtungselement 24 weist beispielhaft eine rechteckige Querschnittsform auf. Es versteht sich, dass das Dichtungselement auch einen andere Querschnittsform, beispielsweise die in Fig. 3 gezeigten Querschnittsform, aufweisen kann.

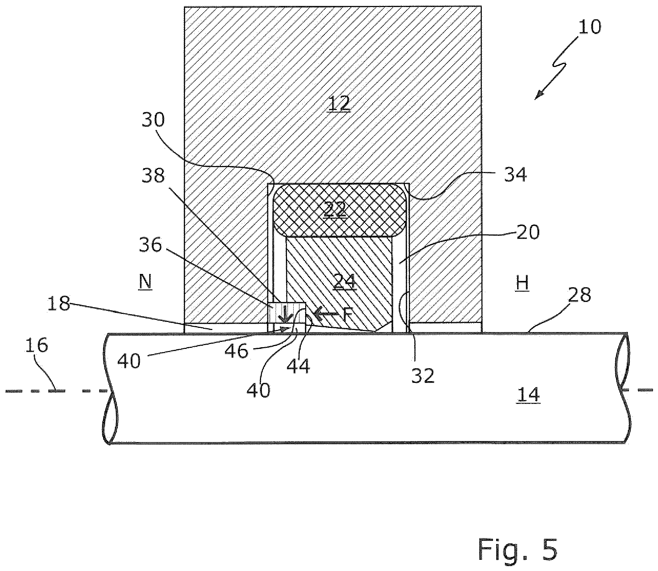

**Fig. 5** zeigt ein weiteres Ausführungsbeispiel der Dichtungsanordnung 10, bei der das Dichtungselement 24 das Dämpfungsglied 36 teilweise von radial außen übergreift. Das Dämpfungsglied ist somit in radialer Richtung am Dichtungselement 24 selbst abgestützt.

Das gummielastisch verformbare Vorspannelement 22 kann grundsätzlich auch eine andere Querschnittsform aufweisen.

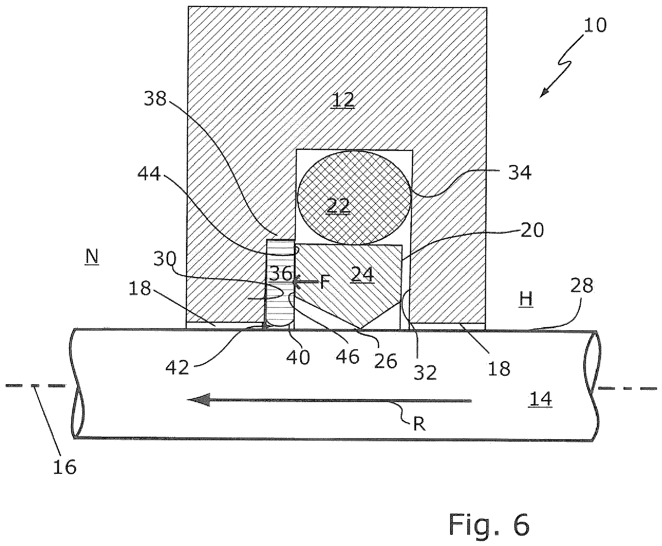

Bei der Dichtungsanordnung 10 gemäß **Fig. 6** weist das Vorspannelement 22 in seinem belasteten Zustand eine im Wesentlichen ovale bzw. elliptische Querschnittsform auf. Das Dämpfungsglied kann, wie dies bei dem in Fig. 6 gezeigten Ausführungsbeispiel der erfindungsgemäßen Dichtungsanordnung 10 gezeigt ist, eine gewölbte Innenwand 40 aufweisen.

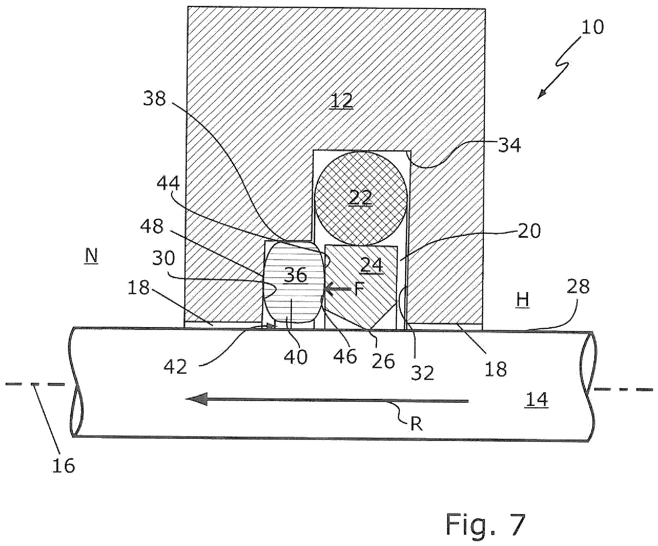

Das Dämpfungsglied 36 kann gemäß einer Weiterbildung der Erfindung auch plankonvex bzw. bikonvex ausgeführt sein. Im letztgenannten Fall sind die Abstützfläche 44 und die gegenüberliegend angeordnete Nutanlagefläche 48 des Dämpfungsglieds 36 nach außen gewölbt, wie dies bei der in **Fig. 7** dargestellten Dichtungsanordnung 10 gezeigt ist.

Das Vorspannelement 22 kann, wie dies in Fig. 7 gezeigt ist, eine im Wesentlichen runde Querschnittsform aufweisen.

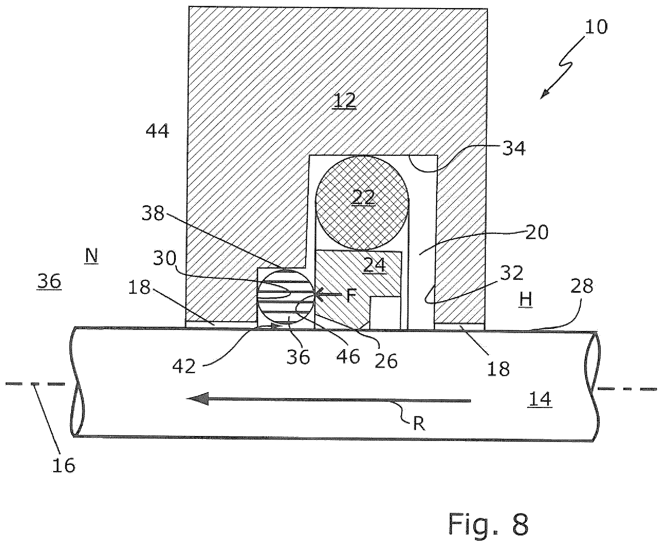

**Fig. 8** zeigt eine weitere Dichtungsanordnung 10, bei der das Dichtungselement 24 im hochdruckseitigen Oberflächenbereich des Dichtungselements 24 gestuft ausgeführt ist.

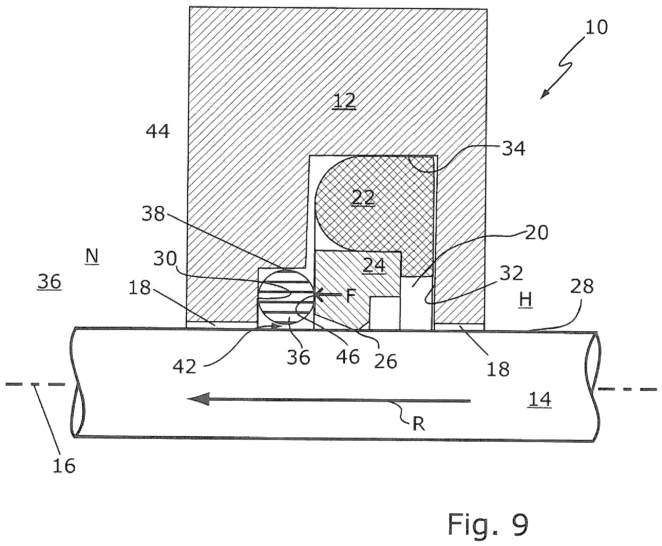

Das Vorspannelement 22 kann, wie dies bei der in **Fig. 9** gezeigten Dichtungsanordnung 10 der Fall ist, das Dichtungselement 24 in axialer Richtung auf der Hochdruckseite übergreifen. Das Vorspannelement 22 wirkt in diesem Fall selbst als ein hochdruckseitiges Dämpfungsglied für das Dichtungselement. Im Betriebseinsatz der Dichtungsanordnung 10 kann das Dichtungselement dadurch auch bei einer Bewegung in Richtung auf die Hochdruckseite (z.B. bei einem kurzfristigen Druckausgleich zwischen der Hochdruckseite H und der Niederdruckseite N) vor einem harten Anschlag gegen die Nutflanke 32 und einer daraus resultierenden Beschädigung geschützt werden.

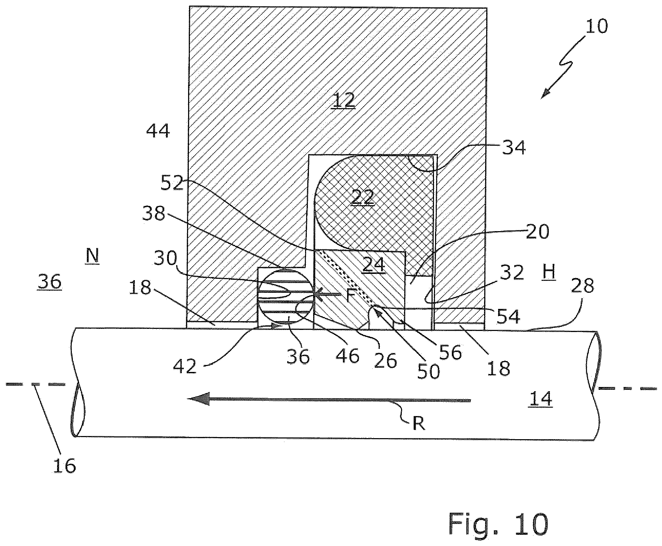

Das Dichtungselement 24 kann gemäß der in **Fig. 10** dargestellten Ausführungsform der Dichtungsanordnung 10 auch mit einem Druckausgleichskanal **50** versehen sein. Der Druckausgleichskanal 50 kann sich insbesondere durch den Dichtungselement 24 hindurcherstrecken und eine niederdruckseitig angeordnete erste Öffnung **52** und eine hochdruckseitig angeordnete zweite Öffnung **54** aufweisen.

Im Normalbetrieb der Dichtungsanordnung 10 ist die erste Öffnung 52 des Druckausgleichskanals 50 durch das Vorspannelement 22 oder, wie dies in Fig. 10 gezeigt ist, durch das Dämpfungsglied 36 gegenüber der Niederdruckseite N abgedichtet. In dem Falle, dass ein auf der Niederdruckseite N herrschender Druck einen auf der Hochdruckseite H herrschenden Druck übersteigt, kann das Dichtungselement 24 bzw. das Dämpfungsglied 36 durch das Druckgefälle zwischen der Niederdruckseite N und der Hochdruckseite H axial in Richtung auf die Hochdruckseite H verschoben werden. Dadurch kann eine fluidische Verbindung der ersten Öffnung 52 des Druckausgleichskanals 50 mit der Niederdruckseite N erreicht werden. Auf diese Weise wird ein Druckausgleich zwischen der Niederdruckseite N und der Hochdruckseite H ermöglicht.

Das Dichtungselement 24 kann nach einer Weiterbildung der Erfindung einen in Fig. 10 dargestellten Stützabschnitt **56** aufweisen, der hochdruckseitig von der Dichtkante 26 in axialer Richtung beabstandet angeordnet ist. Der Stützabschnitt kann abschnittsweise an der Dichtfläche 28 des zweiten Maschinenteils 14 anliegen.

Nachfolgend wird die Funktion der erfindungsgemäßen Dichtungsanordnung 10 unter Bezugnahme auf die Figuren 1 bis 5 näher erläutert:
Bei einer Druckbeaufschlagung des Hochdruckbereichs H der Dichtungsanordnung 10 bzw. einer Bewegung des zweiten Maschinenelements 14 relativ zum Dichtungselement 24 in Richtung R wird das Dichtungselement 24 axial in Richtung auf und gegen das Dämpfungsglied 36 gepresst. Das Dichtungselement 24 stützt sich am Dämpfungsglied 36 ab. Das Dämpfungsglied 36 wird durch das Dichtungselement 24 mit der Anpresskraft F gegen die niederdruckseitige Nutflanke 30 der Haltenut 20 gepresst und - aufgrund seines gegenüber dem Material des Dichtungselements kleineren Elastizitätskoeffizienten - in axialer Richtung komprimiert. Das Dämpfungsglied 36 verformt sich dabei radial in Richtung auf die Dichtfläche 28 des zweiten Maschinenteils 14 (Fig.2). Das Dämpfungsglied 36 ragt zumindest bei der Druckbeaufschlagung der Hochdruckseite H der Dichtungsanordnung 10 mit einem maximalen Betriebsdruck aus der Haltenut 20 hervor. Das Dämpfungsglied 36 verlegt (überdeckt) dadurch teilweise den Dichtspalt 18 zwischen den beiden Maschinenteilen 12, 14 in axialer Richtung. Das Dämpfungsglied 36 dient dadurch als ein dynamisches Sperrelement, durch das eine plastische Verformung und damit Beschädigung/Zerstörung des Dichtungselements 24 bzw. dessen Extrusion in Richtung der Bewegungsachse 16 und in den zwischen den beiden Maschinenteilen 12, 14 ausgebildeten Dichtspalt 18 entgegengewirkt wird. Das Dichtungselement 24 kann bei der erfindungsgemäßen Dichtungsanordnung dadurch insgesamt kleiner dimensioniert und/oder aus einem Material gebildet sein, das gegenüber mechanischen Belastungen weniger widerstandsfähig ist, als das üblicherweise eingesetzte Polytetraflurethylen. So kann das Dichtungselement 24 insbesondere aus einem andere Flurpolymer bzw. einem fluorierten Copolymer, beispielsweise mit PTFE-Monomereinheiten, mit einem gegenüber Polytetraflurethylen nochmals geringeren Reibungskoeffizienten bestehen.

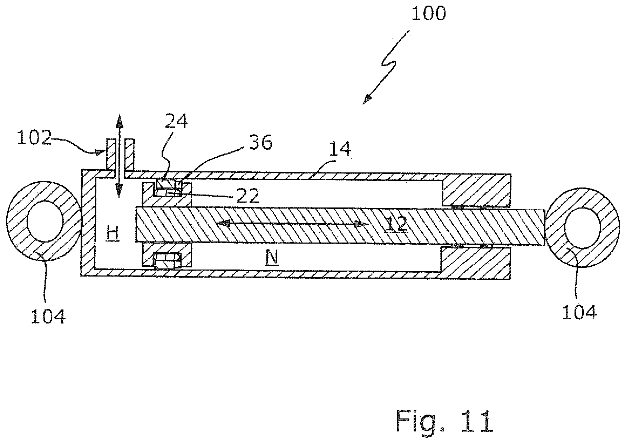

**Fig. 11** zeigt beispielhaft den Einsatz der erfindungsgemäßen Dichtungsanordnung 10 bei einem einfachwirkenden Stoßdämpfer bzw. einem hydraulischen Aktuator **100**, wie dieser bei Baufahrzeugen bzw. Baumaschinen eingesetzt werden kann.

Der Aktuator 100 umfasst eine vorstehend erläuterte Dichtungsanordnung 10. Die gezeigte Dichtungsanordnung 10 ist rein beispielhaft in einer zu der in Fig.1 gezeigten Dichtungsanordnung entsprechenden Weise ausgebildet. Zu beachten ist, dass das erste Maschinenteil 12 der Dichtungsanordnung 10 vorliegend ist als eine Kolbenstange ausgebildet ist, während das zweite Maschinenteil 14 der Dichtungsanordnung 10 als Hydraulikzylinder ausgebildet ist.

Wie aus Fig. 11 hervorgeht, sind das Dichtungselement 24 und das Vorspannelement 22 in der Haltenut 20 der Kolbenstange angeordnet.

Ein mit **102** bezeichneter Anschlussstutzen des hydraulischen Linearmotors 100 dient dem Zuführen eines Arbeitsfluids zum Betätigen der Kolbenstange, d. h. zum Verschieben der Kolbenstange in die mit R bezeichnete Bewegungs- bzw. Arbeitsrichtung relativ zum Hydraulikzylinder. Der hydraulische Aktuator 100 weist am Hydraulikzylinder und an der Kolbenstange Befestigungsmittel **104** zum Befestigen des Aktuators an zwei gegeneinander zu bewegenden Bauteilen auf.

Es versteht sich, dass der Stoßdämpfer bzw. hydraulische Aktuator 100 auch doppeltwirkend ausgebildet sein kann. In diesem Falle sind zwei einander gegenüberliegende Kolbenflächen mit Hydraulikflüssigkeit beaufschlagbar, sodass der Aktuator 100 zwei aktive Bewegungs- bzw. Arbeitsrichtungen R aufweist. Die Dichtungsanordnung 10 kann in diesem Fall ein zweites Dämpfungsglied aufweisen, das axial zwischen der hochdruckseitigen Nutflanke und dem Dichtungselement 24 angeordnet ist.
Die vorstehend im Zusammenhang mit den Figuren 1 bis 11 erläuterten Dichtungsanordnungen 10 können auch bei anderen technischen Bauelementen, beispielsweise bei einem Stoß- bzw. Schwingungsdämpfer, insbesondere für Kraftfahrzeuge, eingesetzt werden.

## Patentansprüche

1. Dichtungsanordnung (10) umfassend:
- ein erstes Maschinenelement (12) und ein zweites Maschinenelement (14), die unter Ausbildung eines Dichtspalts (18) voneinander beabstandet und entlang einer Bewegungsachse (16) relativ zueinander translatorisch bewegbar angeordnet sind;
- ein Dichtungselement (24) mit einer Dichtlippe (26), das zumindest abschnittsweise in einer Haltenut (20) des ersten Maschinenelements (12) angeordnet ist und das zum Abdichten eines Niederdruckbereichs (N) gegenüber einem Hochdruckbereich (H) der Dichtungsanordnung dient;
- ein gummielastisch verformbares Vorspannelement, das in der Haltenut (20) angeordnet ist und das einem Vorspannen des Dichtungselements (24) mit seiner Dichtrippe (26) gegen eine Dichtfläche (28) des zweiten Maschinenelements (14) dient; **dadurch gekennzeichnet, dass** die Dichtungsanordnung umfasst:
- zumindest ein elastisch verformbares Dämpfungsglied (36) zur axialen Abstützung des Dichtungselements (24), das in die Haltenut (20) lose eingelegt ist, wobei das Dämpfungsglied (36) in axialer Richtung zumindest abschnittsweise zwischen einer niederdruckseitig angeordneten Nutflanke (30) der Haltenut (20) und dem Dichtungselement (24) angeordnet ist,
wobei zwischen dem Dämpfungsglied (36) und der Dichtfläche (28) des zweiten Maschinenteils (14) ein Freiraum (42) ausgebildet ist,
der durch die Dichtfläche (28) des zweiten Maschinenelements (14) und eine der Dichtfläche (28) zuweisende Innenwand (40) des Dämpfungsglieds (36 in radialer Richtung begrenzt ist und sich kontinuierlich von der Innenwand (40) des Dämpfungsglieds (36) bis zur Dichtfläche (28) des zweiten Maschinenelements (14) erstreckt,
wobei das Dämpfungsglied (36) bei einer Druckbeaufschlagung des Hochdruckbereichs (H) durch das Dichtungselement (24) in axialer Richtung komprimiert wird und sich in den Freiraum frei hineinverformen kann, wobei das Dämpfungsglied (36) den Dichtspalt (18) im druckbeaufschlagten Zustand des Hochdruckbereichs (H) der Dichtungsanordnung (10) in axialer Richtung teilweise überdeckt und die Dichtfläche (28) des zweiten Maschinenelements (14) bei einer vorgegebenen maximalen Druckbeaufschlagung der Hochdruckseite (H) nicht berührt, und
wobei
das Dämpfungsglied (36) aus einem Material mit einem im Vergleich zum Elastizitätsmodul des Materials des Dichtungselements (24) kleineren Elastizitätsmodul besteht.

2. Dichtungsanordnung nach Anspruch 1, **dadurch gekennzeichnet, dass** das Dämpfungsglied (36) mit seinem von dem zweiten Maschinenelement (14) wegweisenden Ende (38) an dem ersten Maschinenelement (12) abgestützt ist.

3. Dichtungsanordnung nach Anspruch 2, **dadurch gekennzeichnet, dass** das Dämpfungsglied (36) unmittelbar oder über das Vorspannelement (22) an dem ersten Maschinenelement (12) abgestützt ist.

4. Dichtungsanordnung nach einem der vorhergehenden Ansprüche, **dadurch gekennzeichnet, dass** das Dämpfungsglied (36) einstückig mit dem Vorspannelement (22) ausgebildet ist.

5. Dichtungsanordnung nach einem der vorhergehenden Ansprüche, **dadurch gekennzeichnet, dass** das Dämpfungsglied (36) an dem Dichtungselement (24) oder an einer niederdruckseitigen Nutflanke (30) der Haltenut (20) befestigt ist.

6. Dichtungsanordnung nach einem der vorhergehenden Ansprüche, **dadurch gekennzeichnet, dass** das Dämpfungsglied (36) aus einem volumenkonstant verformbaren Elastomer besteht.

7. Dichtungsanordnung nach einem der vorhergehenden Ansprüche, **dadurch gekennzeichnet, dass** das Dichtungselement 24 aus Polytetrafluoräthylen oder aus einem anderen Fluorpölymer, insbesondere einem fluorierten Copolymer, besteht.

8. Dichtungsanordnung nach einem der vorhergehenden Ansprüche, **dadurch gekennzeichnet, dass** das Dichtungselement (24) in der Haltenut (20) mit einem axialen Spiel angeordnet ist.

9. Dichtungsanordnung nach einem der vorhergehenden Ansprüche, **dadurch gekennzeichnet, dass** eines der beiden Maschinenteile (12, 14) als ein Zylinder und das andere der beiden Maschinenteile (12, 14) als eine im Zylinder geführte Kolbenstange ausgebildet sind, wobei das Dichtungselement (36) ein Radialdichtungselement ist.

10. Stoßdämpfer oder hydraulischer Aktuator (100) mit einer Dichtungsanordnung (10) nach einem der vorhergehenden Ansprüche.

## Claims

1. A seal arrangement (10) comprising:
- a first machine element (12) and a second machine element (14), which are arranged spaced apart, forming a sealing gap (28), and in such a way as to be movable in translation relative to one another along a movement axis (16);
- a seal element (24) having a sealing lip (26), at least a section of which is arranged in a holding groove (20) in the first machine element (12) and which serves to seal off a low-pressure region (N) from a high-pressure region (H) of the seal arrangement;
- a rubber-elastically deformable preloading element which is arranged in the holding groove (20) and which serves to preload the seal element (24) with the sealing lip (26) thereof against a sealing surface (28) of the second machine element (14);
**characterised in that** the seal arrangement comprises:
- at least one elastically deformable damping member (36) for axial support of the seal element (24), which member is placed loosely in the holding groove (20), wherein at least a section of the damping member (36) is arranged between a groove flank (30), arranged on the low-pressure side, of the holding groove (20) and the seal element (24) in the axial direction,
wherein a free space (42) is formed between the damping member (36) and the sealing surface (28) of the second machine part (14), said free space being delimited in the radial direction by the sealing surface (28) of the second machine element (14) and an inner wall (40), facing the sealing surface (28), of the damping member (36) and extending continuously from the inner wall (40) of the damping member (36) to the sealing surface (28) of the second machine element (14),
wherein the damping member (36) is compressed in the axial direction by the seal element (24) when the high-pressure region (H) is subjected to pressure and can be deformed freely into the free space, wherein the damping member (36) partially covers the sealing gap (18) in the axial direction in the pressurized state of the high-pressure region (H) of the seal arrangement (10) and does not touch the sealing surface (28) of the second machine element (14) in the case of a predetermined maximum pressurization of the high-pressure side (H), and wherein
the damping member (36) is composed of a material having a lower elasticity modulus than the elasticity modulus of the material of the seal element (24).

2. The seal arrangement as claimed in claim 1, **characterized in that** the damping member (36) is supported on the first machine element (12) by means of its end (38) facing away from the second machine element (14).

3. The seal arrangement as claimed in claim 2, **characterized in that** the damping member (36) is supported on the first machine element (12) directly or via the preloading element (22).

4. The seal arrangement as claimed in one of the preceding claims, **characterized in that** the damping member (36) is formed integrally with the preloading element (22).

5. The seal arrangement as claimed in one of the preceding claims, **characterized in that** the damping member (36) is secured on the seal element (24) or on a low-pressure-side groove flank (30) of the holding groove (20).

6. The seal arrangement as claimed in one of the preceding claims, **characterized in that** the damping member (36) is composed of an elastomer that can be deformed with a constant volume.

7. The seal arrangement as claimed in one of the preceding claims, **characterized in that** the seal element (24) is composed of polytetrafluoroethylene or of some other fluoropolymer, in particular a fluorinated copolymer.

8. The seal arrangement as claimed in one of the preceding claims, **characterized in that** the seal element (24) is arranged with axial play in the holding groove (20).

9. The seal arrangement as claimed in one of the preceding claims, **characterized in that** one of the two machine parts (12, 14) is designed as a cylinder and the other of the two machine parts (12, 14) is designed as a piston rod guided in the cylinder, wherein the seal element (36) is a radial seal element.

10. A shock damper or hydraulic actuator (100) having a seal arrangement (10) as claimed in one of the preceding claims.

## Revendications

1. Dispositif d'étanchement (10) comprenant :
- un premier élément de machine (12) et un second élément de machine (14) qui sont espacés l'un de l'autre avec formation d'un interstice d'étanchement (18), et sont agencés avec mobilité translatoire relative le long d'un axe de mouvement (16) ;
- un élément d'étanchement (24) pourvu d'une lèvre d'étanchement (26) qui est logé, au moins par tronçons, dans une rainure de retenue (20) dudit premier élément de machine (12), et sert à assurer l'étanchéité d'une zone de basse pression (N) par rapport à une zone de haute pression (H) dudit dispositif d'étanchement ;
- un élément de précontrainte, déformable par élasticité du type caoutchouc, qui est logé dans ladite rainure de retenue (20) et sert à précontraindre ledit élément d'étanchement (24), par sa lèvre d'étanchement (26), contre une surface d'étanchement (28) dudit second élément de machine (14) ;
**caractérisé par le fait que** ledit dispositif d'étanchement inclut :
- au moins un organe d'amortissement (36) élastiquement déformable, destiné à procurer un appui axial à l'élément d'étanchement (24) et inséré, avec jeu, dans la rainure de retenue (20), ledit organe d'amortissement (36) étant interposé dans le sens axial, au moins par zones, entre ledit élément d'étanchement (24) et un flanc (30) de ladite rainure de retenue (20) situé côté basse pression,
sachant qu'un espace libre (42), réservé entre ledit organe d'amortissement (36) et la surface d'étanchement (28) de la seconde partie de machine (14), est délimité radialement par ladite surface d'étanchement (28) du second élément de machine (14) et par une paroi intérieure (40) dudit organe d'amortissement (36) tournée vers ladite surface d'étanchement (28), et s'étend continûment depuis ladite paroi intérieure (40) dudit organe d'amortissement (36) jusqu'à ladite surface d'étanchement (28) dudit second élément de machine (14),
l'organe d'amortissement (36) étant comprimé dans le sens axial par l'élément d'étanchement (24), lors d'une pressurisation de la zone de haute pression (H), et pouvant se déformer librement pour pénétrer dans ledit espace libre, sachant que ledit organe d'amortissement (36) recouvre en partie l'interstice d'étanchement (18) dans le sens axial, à l'état pressurisé de ladite zone de haute pression (H) dudit dispositif d'étanchement (10), et n'est pas en contact avec la surface d'étanchement (28) du second élément de machine (14) lors d'une pressurisation maximale préétablie du côté haute pression (H), et sachant que ledit organe d'amortissement (36) est constitué d'un matériau présentant un module d'élasticité moindre, comparativement au module d'élasticité du matériau de l'élément d'étanchement (24).

2. Dispositif d'étanchement selon la revendication 1, **caractérisé par le fait que** l'organe d'amortissement (36) est en appui, contre le premier élément de machine (12), par son extrémité (38) pointant à l'opposé du second élément de machine (14).

3. Dispositif d'étanchement selon la revendication 2, **caractérisé par le fait que** l'organe d'amortissement (36) est en appui, contre le premier élément de machine (12), directement ou par l'intermédiaire de l'élément de précontrainte (22).

4. Dispositif d'étanchement selon l'une des revendications précédentes, **caractérisé par le fait que** l'organe d'amortissement (36) est réalisé d'un seul tenant avec l'élément de précontrainte (22).

5. Dispositif d'étanchement selon l'une des revendications précédentes, **caractérisé par le fait que** l'organe d'amortissement (36) est fixé à l'élément d'étanchement (24), ou a un flanc (30) de la rainure de retenue (20) qui est situé côté basse pression.

6. Dispositif d'étanchement selon l'une des revendications précédentes, **caractérisé par le fait que** l'organe d'amortissement (36) consiste en un élastomère déformable à constance de volume.

7. Dispositif d'étanchement selon l'une des revendications précédentes, **caractérisé par le fait que** l'élément d'étanchement (24) consiste en du polytétrafluoréthylène ou en un autre polymère fluoré, notamment en un copolymère fluoré.

8. Dispositif d'étanchement selon l'une des revendications précédentes, **caractérisé par le fait que** l'élément d'étanchement (24) est logé avec jeu axial dans la rainure de retenue (20).

9. Dispositif d'étanchement selon l'une des revendications précédentes, **caractérisé par le fait que** l'un des deux éléments de machine (12, 14) est réalisé sous la forme d'un cylindre et l'autre, parmi les deux éléments de machine (12, 14), est réalisé sous la forme d'une tige de piston guidée dans ledit cylindre, l'élément d'étanchement (24) étant un élément d'étanchement radial.

10. Amortisseur de chocs ou actionneur hydraulique (100) équipé d'un dispositif d'étanchement (10) conforme à l'une des revendications précédentes.
